# EUROPEAN PATENT APPLICATION

(11) **EP 1 507 393 A1**
(43) Date of publication of application: **16.02.2005**
(21) Application number: 03018483.2
(22) Date of filing: 14.08.2003
(51) Int. Cl.: H04M 3/42

(54) **Group establishment system and method in a communication network**

(71) Applicant: Tenovis GmbH & Co. KG, 60326 Frankfurt am Main (DE)
(72) Inventor: Ertner, Klaus, 65527 Niedernhausen (DE); Gloy, Guido, 60316 Frankfurt Main (DE); Bale, Andrew, Hill Stroud, Gloucestershire GL5 3TX (GB)
(74) Representative: Pfeifer, Lothar

(57) **Abstract**

A method for providing of private telecommunication services to private telecommunication users comprises the steps of
establishing (92) closed user groups of users, a group of users being assigned to a telephony services customer;
providing (94) of telecommunication services for the closed user groups on a common telecommunication services server;
wherein the establishing of the closed user groups on the telecommunication services server is performed centrally, and a management of telecommunication services on the telecommunication services server (42) is performed individually group related. The method allows to provide telecommunication services remotely from one central PBX based server to several groups of users, i.e. several customers individually.

## Description

### BACKGROUND OF THE INVENTION

The present invention relates to a method and a telecommunication services server for providing of private telecommunication services to private telecommunication users belonging to private networks.

Private telecommunication networks have evolved from single location networks to multi location networks, wherein remote locations of early multi location networks were interconnected by leased lines. Today, remote locations can be interconnected via a public network, which configuration is known as a virtual private network. In such multi location networks each location is telephone-served by a PBX (Private Branch Exchange). The PBXs provide among others calling features to users including communication information about other users connected to the same PBX. A user can employ for a call calling features of PBXs subject to user authorization. Traditionally, the PBXs use proprietary protocols for signaling advanced calling features. It needs significant technical effort to implement the signaling of advanced features. Thus it is very costly to provide a private network with advanced telephony features. Therefore, such advanced features are rarely seen in small private networks.

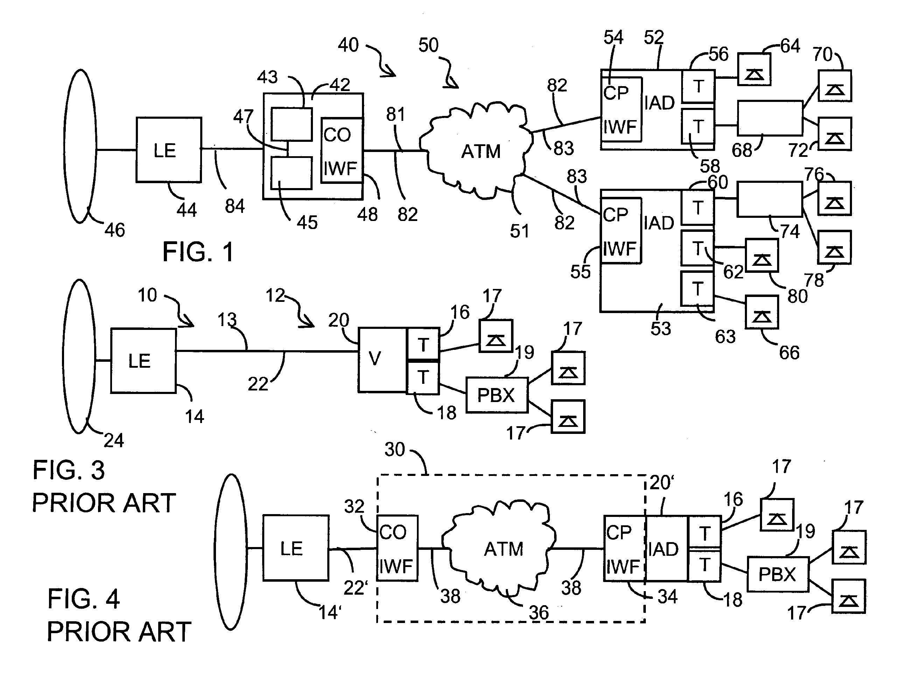

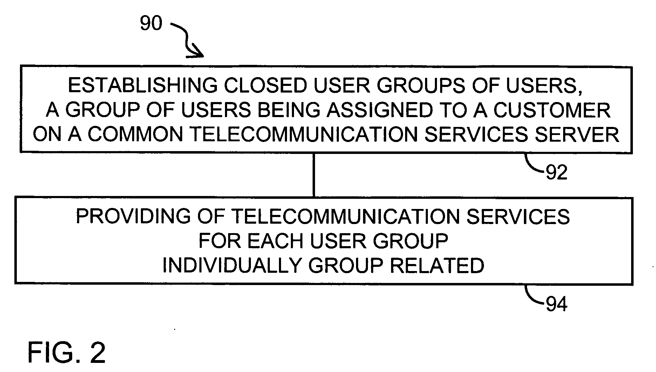

In parallel, public communication networks have evolved by providing local access networks (AN). Fig. 3 shows a prior art communication network 10 comprising an AN 12 that provides a fast local connection 13 between a local exchange (LE) 14 and user terminations 16, 18. A termination of the public network is the interface between public network and private network. A user termination can be for example an analog termination 16 or an ISDN termination 18. A user can connect a telephone 17 or a PBX 19 to a user termination 16, 18. Telephones17 are coupled to the PBX 19. The information flows of several independent user terminations 16, 18 are concentrated by a multiplexing device 20 by multiplexing and are transmitted to the LE 14 at standardized interfaces, e.g. based on 2 Mb/s primary multiplex. In a classical AN a V interface bundles the user data channels and the signaling between the LE 14 and the multiplexing device 20 on line 22. The LE 14 and the devices coupled to the termination 18 communicate under ISDN signaling protocol DSS1. LE 14 is connected to a backbone 24 of the public communication network. The AN is distributed over short or medium distances.

The introduction of ATM interfaces has led to a prior art extension of the AN scenario to long distances as shown in Fig. 4. In addition to the elements of Fig. 3 a loop emulation 30 is inserted, allowing to connect an integrated access device (IAD) 20' to the LE 14' over long distances. Special interworking functions (IWF) adapt the V.5 interfaces to the ATM line, namely a central office (CO) IWF 32 at the LE and a customer premises (CP) IWF 34 at the IAD 20'. Between the CO IWF 32 and the CP IWF 34 is now a long distance ATM network 36 employing ATM signaling on ATM lines 38. The long distance scenario enables network operators without area covering infrastructure to supply user terminations remotely from a central LE. In such an AN also a V.5 interface bundles the user data channels and the signaling between the LE 14' and the IAD 20' on ATM line 22'. The LE 14' and the termination 18' respective the devices coupled to them communicate under telephone signaling protocol DSS1.

Furthermore, as the technology evolves voice and data services become integrated, there is a demand to use the telephone network for additional services that are infrequently used by each single user but frequently used by a high number of users. Such services often have a costly infrastructure part to enable the service and thus are usually provided by large PBXs or by public exchanges but rarefy seen in small PBXs. The owners of small PBXs hesitate to accept services where the provisioning generates a high cost per user.

There are two basic prior art approaches to offer additional services to several unrelated companies from one central service server:

A public network approach is the Centrex service of e.g. Deutsche Telekom AG in Germany.. These telephony services include both PBX features and public network features. The network intelligence, i.e. the feature control is in the public network remote from the customer and the interface between public network and private network is at a "virtual" location (Gateway function) inside the public network. The customer subscribes to Centrex, chooses a selection of features he is willing to pay for, and a Centrex administrator of the public network operator implements the chosen features to be available. The service is quite expensive and customers are companies. Neither a company administrator nor the user can implement all features to be available. Every time a customer wants a feature selection to be modified, this is quite costly due to the need of the additional Centrex administrator of the public network operator as an external service by a third party. Such services controlled from a public network do not include advanced features like user group telephony features of a large PBX.

A private network approach is performed on the basis of a PBX in a single location. This is called a campus solution due to the typical campus area size about that the private network extends. In a large facility the communication system of the building or facility is operated by a communication operator such as the assignee or such as Regus Corporation, UK. The network intelligence is in the private network at the campus and the termination of the public network is at the campus. Legally independent tenants typically rent office space in the facility and each tenant chooses individually a selection of features it is willing to pay for, and a facility communication administrator of the communication operator operating the PBX implements the chosen features to be available. From a service provisioning standpoint this is a managed services solution. The service is medium expensive and customers are companies. Neither a company administrator nor the user can implement the chosen features to be available. Every time a customer wants a feature selection to be modified, this is quite costly due to the need of the additional facility communication administrator of the PBX operator as an external service by a third party. Further, current PBXs are not designed for such use, and therefore, not all possible feature combinations are choosable for several groups / companies simultaneously. Hence, the communication operator offers packages of features containing features combinations that are operable and administrable simultaneously.

In the field of service provisioning there is a need to reduce customisation costs within a managed service, i.e. where a service provider runs a service and is responsible for the availability of the service regardless of any customisation. The customisation is wanted to be performed by the customer who can himself switch on and off single service features due to his actual needs with the effect that he only pays for features he activates. This customisation by customer approach is realized in the art of telecommunication services by self-administering bought, leased or rented PBXs. This is nowadays performed only in closed PBXs of single companies, where a company administrator can administer features for users or authorize the users to activate and deactivate features themselves.

In these aforementioned systems, it is usually complicated to establish a user specific authorisation to use a service. Often, an administrator has to install the authorisation on a feature server. Such authorisations are costly and thus not changed frequently and therefore are often not adapted to a modified need of the user or customer.

### SUMMARY OF THE INVENTION

Thus, it is an object of the invention to provide private telecommunication services to private telecommunication users belonging to private networks at low infrastructural cost per user.

It is a further object of the invention to provide private telecommunication services to private telecommunication users belonging to private networks at low cost specifically for the services actually used by individual users.

These objects of the invention are attained according to the teachings of the independent claims. Further advantageous embodiments of the invention are evident from the dependent claims and the description.

### BRIEF DESCRIPTION OF THE DRAWINGS

Below, the invention and its advantages are presented by means of exemplary embodiments with the aid of the drawings.
FIG. 1 shows schematically a communication network according to the invention;
Fig. 2 shows a flow diagram explaining a method for providing of private telecommunication services to private telecommunication users according to the invention;
FIG. 3 shows schematically a prior art communication network; and
FIG. 4 shows schematically another prior art communication network.

Fig. 1 shows a communication network 40 comprising a telecommunication services server 42 being coupled to a local exchange (LE) 44 of a public communication network that is connected to a backbone 46 of the public communication network. The telecommunication services server 42 comprises a central office interworking functions (CO IWF) module 48 for interfacing to an ATM network 50. Integrated access devices (IAD) such as IAD 52 and IAD 53 are connected to the ATM network 50. IADs 52 and 53 contain interworking functions (CP IWF) modules 54 and 55, respectively, for interfacing to the ATM network 50. IAD 52 further contains user terminations 56, 58 , and IAD 53 contains user terminations 60, 62, 63. IAD 52 and IAD 53 are at remote locations from each other and from telecommunication services server 42.

In this example, the telecommunication services server 42 comprises a PBX 43. The user terminations 56, 58, 60, 62, 63 connect different kinds of user equipment 64, 66, 68, 70 to the telecommunication services server 42, which operate under respective different signaling schemes. Here, termination 56 connects an analog telephone as terminal 64, termination 58 connects a secondary PBX 68. The secondary PBX 68 is coupled to system telephones of the secondary PBX 68 system as terminals 70, 72. Termination 60 connects a secondary PBX 74 to a facility telephone network having PBX system telephone terminals 76 and 78 of the telecommunication services server 42 PBX system. Termination 62 connects PBX system telephone terminal 80 of the telecommunication services server 42 PBX system directly to the IAD 53. The system telephone terminals 76, 78, 80 are adapted to the server PBX feature signaling and thus providing the possibility to use all PBX features of the telecommunication services server 42. Termination 63 connects an ISDN telephone as terminal 66.

In the above example, it is understood that not all telephone terminals are capable of delivering or providing all features offered by the telecommunication services server 42. For example, common plain old analog telephone terminal 64 or ISDN telephone terminal 80 are usually not capable of displaying group related features because such terminals don't usually support the respective signaling. Nevertheless, these terminals 64, 80 are connectable to and integrable in their user group. It is further understood that user terminations such as 56, 58, 60, 62, 63 can connect different kinds of other equipment e.g. fax machines, CTI server, etc. to the telecommunication services server 42.

The user terminations 56, 58, 60, 62, 63 belong to the same telephony services customer of the service provider. Advantageously, all terminations of an IAD are assigned to the same user group. Other user groups served by the same telecommunication services server 42 are not shown for the reason of simplicity. Preferably, the IADs 52 and 53 and their CP IWF modules 54 and 55, are on customer premises. This allows an interfacing to the ATM network 50 from customer premises without a bottleneck of many long parallel lines. The devices coupled to the terminations 56, 58, 60, 62 all belong to the same user group, here a company which is one telephony services customer of the service provider.

The telecommunication services server 42 comprises a PC based application server 45, advantageously being coupled via e.g. a primary rate access interface 47 to PBX 43. The application server 45 is used for memory intensive and processor power intensive applications such as unified messaging services (UMS) or CTI services. The application server 45 can be located remote from the user and/or remote from the PBX 43. Being on PC basis, the application server 45 provides relatively cheap memory and processor power compared to PBX integrated memory and processor power. By coupling the PBX 43 and the application server 45, the telecommunication services server provides services of a very large PBX to customers that establish small user groups at reasonable price.

The telecommunication services provided by telecommunication services server 42 include providing advanced call features that are not signalable via ISDN standard protocols.

The telecommunication services server 42 provides user group specific services to the user group, such as a user group specific calling number plan which can be administered from within the group by a group administrator, without a system administrator of the services server being involved. The group can have individual use-dependent billing, i.e. only those services and server features are billed that are actually used or initiated by the group administrator. The establishing of the closed user groups on the telecommunication services server is performed centrally by the system administrator. Once a group is established or set up, the management of telecommunication services for each group on the telecommunication services server is performed individually group related by the group administrator. This is described in the following.

From a signaling and protocol point of view, there is a long distance ATM network connection 50 between the CO IWF 48 and the CP IWFs 54, 55 employing ATM signaling on ATM lines 81. The ATM connection provides a Loop Emulation Service (LES). The ATM network connection 50 comprises a line 82 between the CO IWF 48 and an ATM network access node (not shown), an ATM backbone 51, and lines 83 between another ATM network access node (not shown) and the CP IWFs 54, 55. Lines 83 are preferably DSL lines. The ATM network connection 50 can be substituted by an internet protocol (IP) connection. The telecommunication services server and the user terminations 56, 58, 60, 62, 63 respective the devices coupled to them can communicate under various telephone/ISDN signaling protocols (analogue, DSS1, proprietary). Advantageously, a transmission line between the telecommunication services server and a user telecommunication terminal includes a Wide Area Network (WAN) section. Between the LE 44 and the telecommunication services server 42 the normal ISDN signalling protocol (DSS1) is used on line 84.

Fig. 2 shows a flow diagram 90 explaining a method for providing of private telecommunication services to private telecommunication users according to the invention. The method starts in step 92, establishing closed user groups of users, a group of users being assigned to a telephony services customer on a common telecommunication services server. The expression telephony services customer is used to explain the quality or kind of user groups according to the invention different from user groups handled in the prior art. Telephony services customers are understood here as being legally and administratively completely separate from each other. The telephony services customers usually demand and have individual billing and data privacy. And the telephony services customers define the services available to their group or groups as a whole or specific to each member. This concept of the invention maps the demand of organisations such as companies or authorities to control the services and costs of the communication of their members. In step 92, the establishing of the closed user groups on the telecommunication services server is performed centrally. This is done by the system administrator in order to set up groups for and commonly billable to his customers.

The establishing of a closed user group comprises defining the physical terminations that belong to the group. Usually, this includes also a definition of a communication protocol type that defines the communication via this termination. The telecommunication services server 42 is typically capable of providing a plurality of signalling protocols.

The method continues in step 94, telecommunication services are provided for each closed user group individually group related. This enables to provide private telecommunication services of a large PBX quality to closed user groups of any size individually group related from a far distance remote telecommunication services server serving several groups at low costs per user. And it enables that telecommunication services are billed per use.

The different closed user groups are established by a system administrator having authority to establish closed user groups on telecommunication services server 42.

In a preferred embodiment of the invention the management of telecommunication services on the telecommunication services server is performed individually group related. For each group, usually from within each group, preferably a group administrator administers the group members, users, and grants them permission or prohibits them to use telecommunication services provided by the telecommunication services server 42. The individually group related management of telecommunication services on the telecommunication services server is performed externally from a group member from outside the server, preferably via a user termination 56, 58, 60, 62, 63, or via the inter/intra- net. The group administrator can perform group related management from his terminal or CTI related from his computer.

Advantageously, the telecommunication service is activated by a user and is billed per use.

A telecommunication service includes voice and/or data services. The telecommunication services comprise corporate grade hosted voice and data services.

Advantageously, the telecommunication services include enabling to establish sub-groups having sub-group features in common. Each member of a sub-group can see on his terminal the telephony condition of all other sub-group members of the sub-group.

The telecommunication services includes integration of private telecommunication services for different telecommunication devices. The telecommunication services include CTI based features. Thus, telephone terminals are associated to computers, e.g. workstations, and a user can operate his telephone terminal from his computer.

In another preferred embodiment the telecommunication services server is based on a PBX and comprises structural components of a PBX. This PBX or these structural PBX components are able to keep different user groups separate from each other.

Preferably, the telecommunication services server comprises a function for separately addressing closed groups for managing purposes.

The server 42 comprises an IP interface for an IP connection. The IP interface enables communication to computers or servers on IP basis.

The server 42 comprises an ISDN interface for an ISDN connection. This allows to couple the server 42 to the local exchange 44 by an ISDN standard connection.

A transmission line between the telecommunication services server and a user telecommunication terminal advantageously includes a Wide Area Network (WAN) section.

Those of skill in the art will understand that the above described embodiment comprises an aggregation of independent features by way of example, wherein each is individually useful to provide additional value to the invention described in the independent claims.

Preferably, the telecommunication services include integration of private telecommunication services for different telecommunication devices, advantageously Unified Messaging that may include voice services, telephony, and fax is provided. MailServer, OnlineBackup, are available

For administration and billing, a location oriented organisation structure can easily be matched. OMAPS Order Management and Provisioning System (uManage) can easily be supported. Concepts as Pay per service per month or personalized communication profile or "Pay as you go" are easily implementable. New additional services can be implemented and offered using an established customer relation.

The long distance scenario enables network operators without area covering infrastructure to supply user terminations remotely from a central LE.

### Reference Numbers

- prior art communication network 10: application server 45
- AN 12: backbone 46
- fast local connection 13: primary rate access interface 47
- local exchange (LE) 14: (CO IWF) module 48
- user terminations 16, 18: ATM network 50
- telephone 17: ATM backbone 51
- PBX 19: IADs 52 and 53
- multiplexing device 20: (CP IWF) modules 54 and 55
- line 22: user terminations 56, 58, 60, 62, 63.
- backbone 24: analog telephone terminal 64
- loop emulation 30: ISDN telephone as terminal 66
- CO IWF 32: secondary PBX 68
- CP IWF 34: system telephone terminals 76 and 78, 80
- ATM network 36: ATM lines 81
- ATM lines 38: line 82
- communication network 40: lines 83
- telecommunication services server 42: flow diagram 90
- PBX 43: step 92
- local exchange (LE) 44: step 94

## Claims

1. A method for providing of private telecommunication services to private telecommunication users comprising the steps of
establishing (92) closed user groups of users, each group of users representing one telephony services customer;
providing (94) of telecommunication services for the closed user groups on a common telecommunication services server;
wherein the establishing of the closed user groups on the telecommunication services server is performed centrally, and a management of telecommunication services on the telecommunication services server is performed group related by a group member.

2. The method of claim 1, wherein the group related management of telecommunication services on the telecommunication services server is performed externally from outside the telecommunication services server.

3. The method of claim 1, wherein the telecommunication services include enabling to establish sub-groups having sub-group features in common.

4. The method of claim 1, wherein the telecommunication services server is far distance remote from a user telecommunication terminal.

5. The method of claim 1, wherein a transmission line between the telecommunication services server and a user telecommunication terminal includes a section comprising an ATM connection.

6. The method of claim 5, wherein the ATM connection provides a Loop Emulation Service (LES).

7. The method of claim 1, wherein the telecommunication services include providing advanced call features that are not signalable via ISDN standard protocols.

8. A telecommunication services server (42) for providing of private telecommunication services to private user telecommunication terminals (64, 70, 72, 76, 78, 80), the server being adapted to establish closed groups of user telecommunication terminals, wherein a closed group of user telecommunication terminals is assigned to a telephony services customer, the server being adapted to provide telecommunication services to the closed user groups centrally;
wherein the establishing of the closed groups on the server is performed centrally, and a management of telecommunication services on the server is performed group related by a group member.

9. The server of claim 8, wherein the telecommunication services server (42) comprises structural components of a PBX .

10. The server of claim 9, wherein within the telecommunication services server (42) the PBX (42) is coupled via a primary rate access interface (47) to a PC based application server (45).
